(19)

Europäisches
Patentamt
European
Patent Office
Office européen
des brevets

(11) **EP 2 555 589 A1**

(12) # EUROPEAN PATENT APPLICATION

(43) Date of publication:
**06.02.2013 Bulletin 2013/06**

(51) Int Cl.:
***H05B 33/08*** (2006.01)

(21) Application number: **12161701.3**

(22) Date of filing: **28.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.08.2011 KR 20110077088**

(71) Applicant: **Samsung Electronics Co., Ltd.
Suwon-si, Gyeonggi-do, 443-742 (KR)**

(72) Inventors:
• **Kang, Jeong-il
Gyeonggi-do (KR)**
• **Choi, Hyo-soon
Gyeonggi-do (KR)**

(74) Representative: **Hewett, Jonathan Michael
Richard et al
Venner Shipley LLP
200 Aldersgate
London EC1A 4HD (GB)**

(54) **Apparatus and method for controlling led driving circuit and apparatus and method for driving led**

(57) An apparatus for driving a light-emitting diode (LED) is provided. The apparatus includes an LED, a voltage sensing unit which senses a voltage applied to the LED, a current sensing unit which senses a current flowing into the LED, a DC-to-DC converter which converts an input voltage into an LED driving voltage and provides the LED driving voltage to the LED, an LED driving unit which drives the LED according to a dimming-on signal and a dimming-off signal; and a control unit which controls the DC-to-DC converter such that the current sensed by the current sensor follows a reference current, if the dimming-on signal is received, and controls the DC-to-DC converter to maintain the voltage sensed by the voltage sensor at a same voltage as a voltage of the LED at a dimming-off time, if the dimming-off signal is received.

**EP 2 555 589 A1**

## Description

The present invention relates to an apparatus and method for controlling a light-emitting diode (LED) driving circuit and an apparatus and method for driving an LED, and more particularly, to an apparatus and method for controlling an LED driving circuit and an apparatus and method for driving an LED, which can prevent a drop in a voltage applied to the LED driving circuit.

A liquid crystal display (LCD) device is lighter and slimmer than other display apparatuses. Also, the LCD device is widely used because the LCD device consumes less electric power and is driven with a low driving voltage. However, the LCD device needs a backlight to provide light to an LCD panel because the LCD device does not emit light by itself.

A cold cathode fluorescent lamp (CCFL) and the LED, etc., are usually used as the light source of the backlight in the LCD device. The CCFL is disadvantageous in that the CCFL uses mercury and causes pollution. Further, the CCFL is disadvantageous in that the CCFL has slow response time and low color reproducibility, and the CCFL is not suitable for being light, slim, short and small.

On the other hand, advantages of the LED are that the LED is eco-friendly because the LED does not use harmful substances for the environment and the LED can be driven by pulses. Further, the LED has outstanding color reproducibility and may change luminance and temperature of colors by controlling the amount of light of red, green, and blue diodes. Recently, the LED has been adopted as a backlight source in LCD panels by virtue of suitability for light, slim, short and small.

With the rapid growth of LED technology, various integrated circuit (IC) devices, which supply controlled power to LEDs, have been developed. Direct current (DC) sources, which consume a considerable amount of power, have long been used, but are increasingly being replaced with switching mode LED drivers due to their less eco-friendly features. Switching mode LED drivers require the output of an LED to be adjusted frequently. Since the brightness of an LED is determined by a current input to the LED, it is necessary to adjust the current applied to the LED. The adjustment of the current applied to an LED is referred to as dimming control.

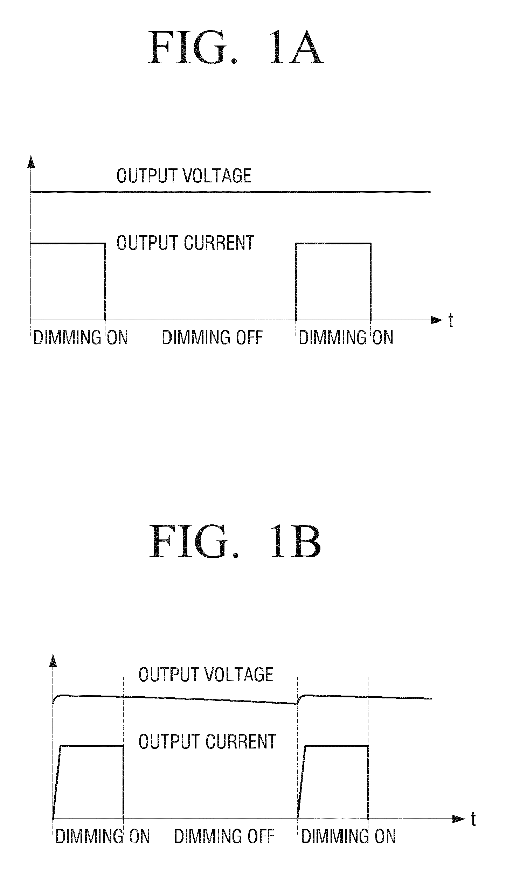

FIG. 1A is a waveform diagram illustrating the variation of an LED output current and an LED output voltage according to whether dimming is on or off in a case in which a switching mode LED driving circuit operates ideally. Referring to FIG. 1A, in an ideal scenario, an LED output current is controlled according to whether dimming is on or off, and may thus vary in the form of a square wave, whereas an LED output voltage is determined by the capacitance of a capacitor at the output port of the LED driving circuit and is thus uniformly maintained.

On the other hand, in actual cases, an LED output voltage decreases over time due to leakage from the capacitor of an LED driving circuit and due to the use of a resistor to sense the LED output voltage for protection purposes. In this case, a voltage lower than the voltage required to properly flow a current in an LED may be applied to the LED when a subsequent dimming-on period begins, and thus, it may take time for an output LED current to become normal.

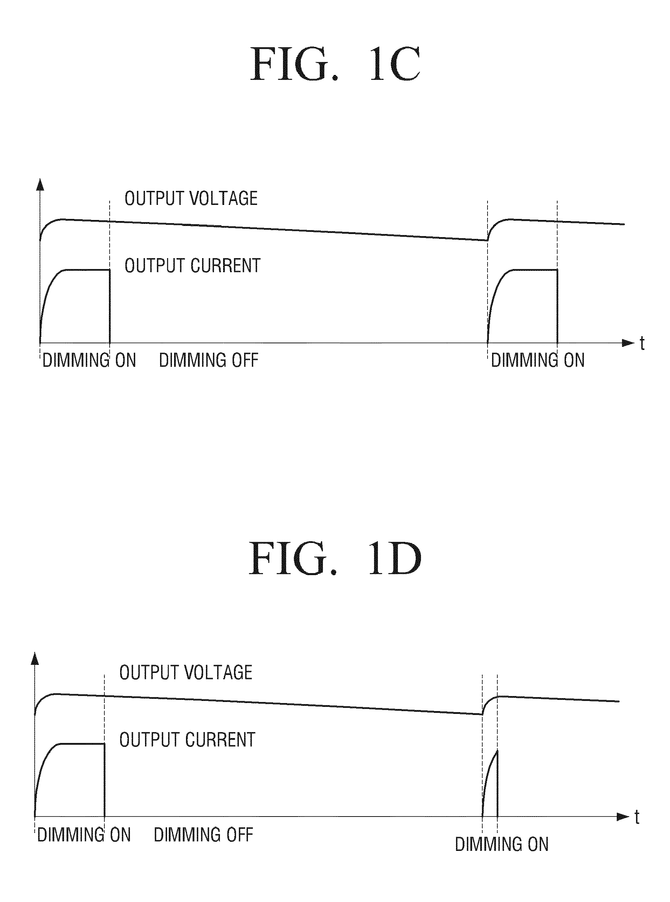

Referring to FIG. 1C, a prolonged dimming-off period may result in a prolonged transient dimming-on period due to continued output voltage discharge during the dimming-off period. On the other hand, referring to FIG. 1D, a further prolonged dimming-off period or a short dimming-on period may cause a transient dimming-on period to continue even after the dimming-on period ends. As a result, dimming may be prematurely turned off even before an LED output current reaches a predefined level, and thus, the waveforms of the LED output current and light emitted from the LED may both become unstable.

The dynamic contrast ratio of a display device may be improved by increasing the length of a dimming-off period in an LCD backlight using an LED. That is, the picture quality of a display screen may be improved by completely turning off dimming while the whole display screen is displayed in black. In this method, however, the LCD backlight may not be able to return to its normal brightness even after a dimming-off period ends, or it may take a while for the LCD backlight to return to its normal brightness.

Exemplary embodiments of the present invention provide an apparatus and method for controlling a light-emitting diode (LED) driving circuit and an apparatus and method for driving an LED, which can improve the dynamic contrast ratio and the picture quality of a display screen by applying a stable current to an LED readily in response to a dimming-on signal even in case of a prolonged dimming-off period.

According to an aspect of the exemplary embodiments, there is provided an apparatus for controlling an LED driving circuit, including: a current control unit which outputs a first control signal for adjusting a duty cycle of a pulse width modulation (PWM) signal of the LED driving circuit to make a current of an LED, if a dimming-on signal is received, which is driven by the LED driving circuit, follows a reference current; a voltage control unit which transmits a second control signal for adjusting a duty cycle of the PWM signal to make a voltage of the LED at a dimming-off time is maintained, if a dimming-off signal is received; and a switching unit which transmits the first control signal to the LED driving circuit, if the dimming-on signal is received and transmits the second control signal to the LED driving circuit if the dimming-off signal is received.

The apparatus for controlling an LED driving circuit may also include a sampling unit which samples the LED voltage at the dimming-off time and provides the sampled voltage to the voltage control unit.

According to another aspect of the exemplary embodiments, there is provided an apparatus for driving an LED, including: an LED; a voltage sensing unit which senses a voltage applied to the LED; a current sensing unit which senses a current flowing into the LED; a DC-to-DC converter which converts an input voltage into an LED driving voltage and provides the LED driving voltage to the LED; an LED driving unit which drives the LED according to a dimming-on signal and a dimming-off signal; and a control unit which controls the DC-to-DC converter to make the current sensed by the current sensing unit follow a reference current, if the dimming-on signal is received and to maintain the same voltage as a voltage of the LED at a dimming-off time if the dimming-off signal is received.

The DC-to-DC converter may include a transistor which is driven by a PWM signal with a duty cycle adjusted by the control unit.

The control unit may include a current control unit which outputs a first control signal for adjusting the duty cycle of the PWM signal to make the current sensed by the current sensing unit follows the reference current, if the dimming-on signal is received; and a voltage control unit which transmits a second control signal for adjusting the duty cycle of the PWM signal to make the voltage of the LED at the dimming-off time maintained, if the dimming-off signal is received.

The control unit may also include a switching unit which transmits the first control signal to the transistor, if the dimming-on signal is received and transmits the second control signal to the transistor, if the dimming-off signal is received.

The control unit may also include a sampling unit which samples the LED voltage at the dimming-off time and provides the sampled voltage to the voltage control unit.

According to another aspect of the exemplary embodiments, there is provided a method of controlling an LED driving circuit, including: adjusting a duty cycle of a PWM signal of the LED driving circuit to make a current of an LED, which is driven by the LED driving circuit, follow a reference current, if a dimming-on signal is received; and adjusting a duty cycle of a PWM signal of the LED driving circuit to make a voltage of the LED at a dimming-off time maintained, if a dimming-off signal is received.

According to another aspect of the exemplary embodiments, there is provided a method of driving an LED, including: converting an input voltage into an LED driving voltage by using a DC-to-DC converter; driving an LED by using the LED driving voltage; sensing a voltage and current of the LED; and controlling the DC-to-DC converter to make the current follow a reference current, if a dimming-on signal is received and to maintain the same voltage as a voltage of the LED at a dimming-off time, if a dimming-off signal is received.

The controlling may include, increasing a duty cycle of a PWM signal, which is input to a transistor included in the DC-to-DC converter, to make the sensed current follow the reference current, if the dimming-on signal is received and increasing the duty cycle of the PWM signal to make a voltage of the LED at the dimming-off time maintained, if the dimming-off signal is received.

As described above, it is possible to compensate for any voltage drops that may be caused by electric discharges even when a dimming-off period lasts long. Therefore, it is possible to uniformly maintain an LED output voltage at a required level to properly flow a current into an LED during the dimming-off period and thus to improve the dynamic contrast ratio and the picture quality of a display device

The above and/or other aspects of the present invention will be more apparent by describing certain exemplary embodiments of the present invention with reference to the accompanying drawings, in which:

FIGS. 1A to 1D are waveform diagrams illustrating an output voltage and an output current of a light-emitting diode (LED) in a dimming on/off period in ideal and practical cases;
FIG. 2 is a block diagram of an apparatus for controlling an LED driving circuit according to an exemplary embodiment;
FIG. 3 is a detailed block diagram of an apparatus for controlling an LED driving circuit according to an exemplary embodiment;
FIG. 4 is a circuit diagram of an LED driving device according to an exemplary embodiment;
FIG. 5 is a flowchart illustrating a method of controlling an LED driving circuit according to an exemplary embodiment; and
FIG. 6 is a flowchart illustrating a method of driving an LED according to an exemplary embodiment

Hereinafter, certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments may be carried out without those specifically defined matters. Also, well-known functions or constructions are not described in detail since they would obscure the invention with unnecessary detail.

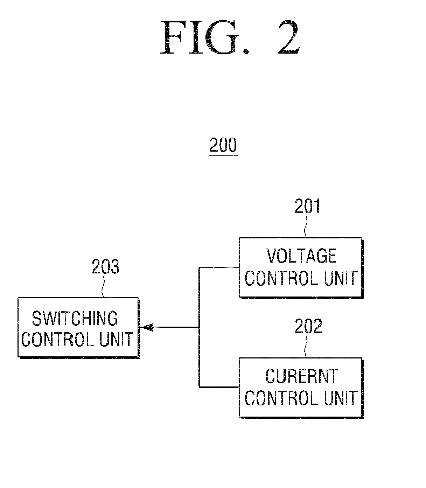

FIG. 2 is a block diagram of an apparatus 200 for controlling an LED driving circuit according to an exemplary embodiment. Referring to FIG. 2, the apparatus 200 includes a voltage control unit 201, a current control unit 202, and a switching unit 203.

The voltage control unit 201 controls a voltage applied to an LED (not shown).

Specifically, in response to the receipt of a dimming-off signal, the voltage control unit 201 may output a control signal for controlling the duty cycle of a gate output such that the voltage applied to the LED at a time when dimming is off may be maintained.

The current control unit 202 controls a current which flows into the LED.

Specifically, when a dimming-on signal is received, the current control unit 202 may output a control signal for controlling the duty cycle of a gate output such that the current of the LED, which is driven by an LED driving circuit (not shown), may follow a reference current.

The switching unit 203 switches an output in response to a dimming-on signal or a dimming-off signal.

Specifically, the switching unit 203 may transmit the control signal output by the current control unit 202 to the LED driving circuit when a dimming-on signal is received, and may transmit the control signal output by the voltage control unit 201 to the LED driving circuit when a dimming-off signal is received.

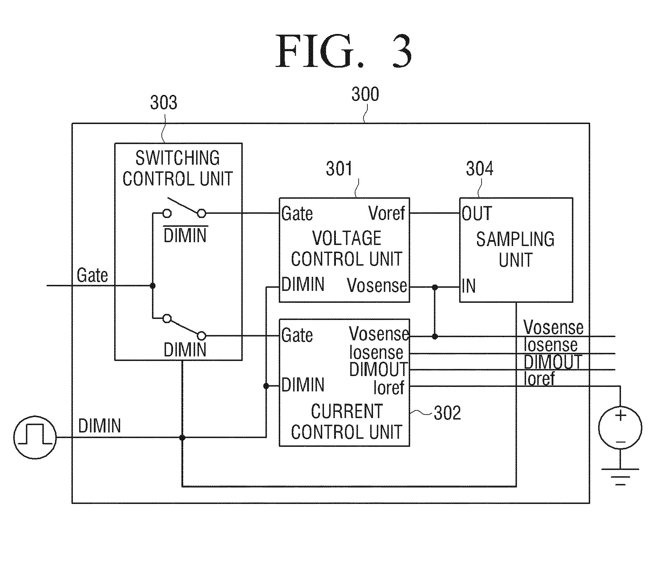

An apparatus for controlling an LED driving circuit according to another exemplary embodiment is described with reference to FIG. 3.

FIG. 3 is a detail block diagram of an apparatus 300 for controlling an LED driving circuit according to an exemplary embodiment. Referring to FIG. 3, the apparatus 300 includes a voltage control unit 301, a current control unit 302, a switching unit 303, and a sampling unit 304.

The output voltage of an LED may be determined by Equation (1):

$$V_f = V_{dc}/(1-D) \qquad \ldots(1)$$

where $V_f$ denotes the output voltage of an LED, $V_{dc}$ denotes driving power and D denotes duty cycle.

The voltage control unit 301 controls a voltage applied to an LED (not shown).

The voltage control unit 301 may receive an input dimming signal DIMIN.

When a dimming-off signal is received from DIMIN, the voltage control unit 301 may output a control signal for adjusting the duty cycle of a gate output such that the voltage of the LED at a dimming-off time may be maintained.

That is, when a dimming-off signal is received, the voltage control unit 301 may compare a voltage Voref, which is the voltage of the LED at a dimming-off time and is provided by the sampling unit 304, with a voltage Vosense sensed during a dimming-off period, and may output a control signal for adjusting the duty cycle of a pulse width modulation (PWM) signal, which is the output of the gate of the voltage control unit 301, such that the voltage Vosense may follow the voltage Voref.

In reality, the voltage sensed from the LED during a dimming-off period, i.e., the voltage Vosense, decreases over time, as described above with reference to FIGS. 1B to 1D. Thus, the voltage control unit 301 may increase the duty cycle of a PWM signal, which is the output of the gate of the voltage control unit 301, such that the voltage Vosense may follow the voltage Voref.

As a result, the voltage applied to the LED during a dimming-off period may be uniformly maintained along with the output current of the LED, not only throughout the dimming-off period but also throughout a dimming-on period, as illustrated in FIG. 1A.

The voltage control unit 301 may be configured not to output a control signal for adjusting the duty cycle of a PWM signal when a dimming-on signal is received. Referring to FIG. 3, the apparatus 300 may include the switching unit 303, and may thus prevent, with the aid of the switching unit 303, the output of the voltage control unit 301 from being transmitted to an LED driving circuit (not shown) during a dimming-on period, even if the voltage control unit 301 outputs a control signal for adjusting the duty cycle of a PWM signal.

The current control unit 302 controls a current which flows into the LED.

The current control unit 302 may receive the input dimming signal DIMIN and a reference current Ioref.

When a dimming-on signal is received from DIMIN, the current control unit 302 may output a control signal for controlling the duty cycle of the output of the gate thereof such that a current sensed from the LED, which is driven by the LED driving unit, may follow the reference current Ioref.

That is, when a dimming-on signal is received, the current control unit 302 may receive the reference current Ioref, which is a desired level of current to be applied to the LED, and may output a control signal for adjusting the duty cycle of a PWM signal, which is the output of the gate of the current control unit 302, such that the current Iosense sensed from the LED during a dimming-on period may follow the reference current Ioref.

That is, by adjusting the duty cycle of a PWM signal, the current control unit 302 may adjust the current applied to the LED so that a desired level of current may flow into the LED.

The current control unit 302 may be configured not to output a control signal for adjusting the duty cycle of a PWM signal when a dimming-off signal is received.

Referring to FIG. 3, the apparatus 300 may include the switching unit 303, and may thus prevent, with the aid of the switching unit 303, the output of the current control unit 302 from being transmitted to the LED driving circuit during a dimming-off period, even if the current control unit 302 outputs a control signal for adjusting the duty cycle of a PWM signal.

The current control unit 302 may receive the voltage Vosense in response to the voltage applied to the LED being sensed.

The current control unit 302 may receive the current Iosense in response to the current applied to the LED being sensed.

The current control unit 302 may output an output dimming signal DIMOUT indicating whether dimming is on or off to the LED driving unit in response to the input dimming DIMIN.

When a dimming-on signal is received, the switching unit 303 may transmit the control signal output by the current control unit 302 to the LED driving circuit. Alternatively, when a dimming-off signal is received, the switching unit 303 may transmit the control signal output by the voltage control unit 301 to the LED driving circuit.

For example, referring to FIG. 3, the switching unit 303 may be disposed in the apparatus 300. In another non-limiting example, the switching unit 303 may be disposed outside the apparatus 300.

The sampling unit 304 may sample the voltage applied to the LED at a dimming-off time and may provide the results of the sampling to the voltage control unit 301.

More specifically, the sampling unit 304 may receive the voltage Vosense, may sample the LED voltage at a dimming-off time, may uniformly maintain the sampled LED voltage, and may provide the corresponding LED voltage to the voltage control unit 301. In this example, the voltage control unit 301 may receive a voltage obtained by the sampling performed by the sampling unit 304 as the voltage Voref, and may compare the voltage Voref with the voltage Vosense.

In the example illustrated in FIG. 2 or 3, the apparatus 200 or 300 may uniformly maintain the output voltage of an LED during a dimming-off period at a level required to stably flow a current into the LED by compensating for any voltage drops that may be caused by electric discharges even when the dimming off period lasts for a long time during the operation of an LED driving circuit.

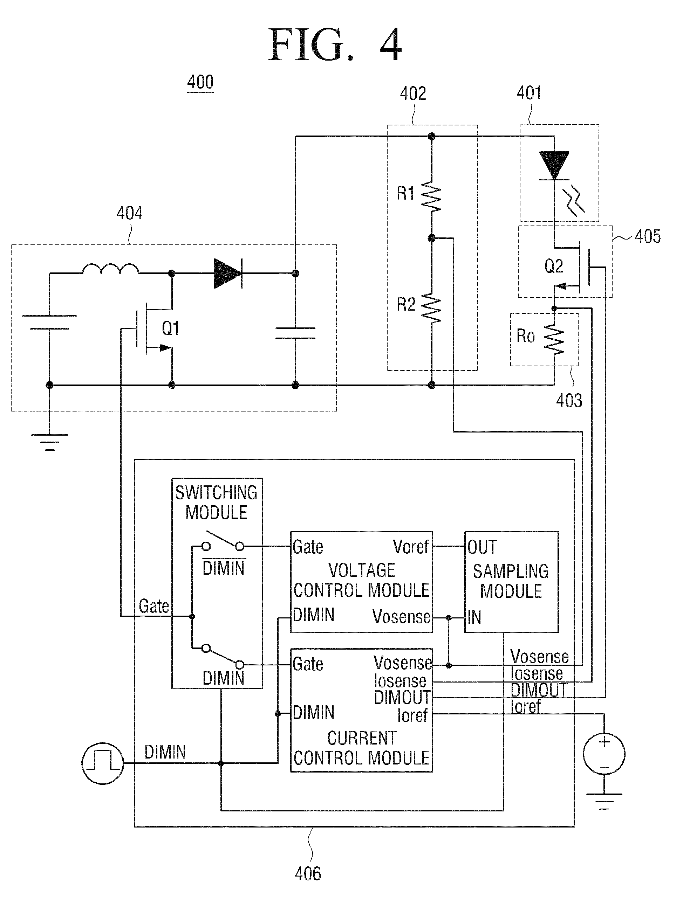

FIG. 4 is a circuit diagram of an apparatus for driving an LED according to an aspect of the exemplary embodiments. Referring to FIG. 4, an apparatus 400 for driving an LED includes an LED 401, a voltage sensing unit 402 (e.g., a voltage sensor), a current sensing unit 403 (e.g., a current sensor), a DC-to-DC converter 404, an LED driving unit 405 and a control unit 406.

The LED 401 is a semiconductor made of gallium (Ga), phosphorus (P), and arsenic (As). The LED 401 may have the same features as a diode, and may emit red, green and yellow light in response to a current being applied thereto.

The voltage sensing unit 402 may sense a voltage applied to the LED 401, i.e., a voltage Vosense.

More particularly, the voltage sensing unit 402 may sense a voltage applied to the LED 401, may be connected to the control unit 406, and may provide the sensed voltage, i.e., a voltage Vosense, to the control unit 406.

The voltage sensing unit 402 may provide the voltage Vosense to the control unit 406 to provide an over-voltage protection function, which is characterized by disabling the whole circuitry if the voltage Vosense is greater than a predetermined voltage generated in the control unit 406.

Referring to FIG. 4, the voltage sensing unit 402 may include resistors R1 and R2, which are connected in series, to detect a voltage applied to an LED. However, there are no restrictions to the number of resistors included in the voltage sensing unit 402 and how the resistors are connected in the voltage sensing unit 402. That is, the voltage sensing unit 402 may include less than two resistors or more than two resistors, and the resistors may be connected in series or in parallel as long as they can properly detect a voltage.

The current sensing unit 403 may sense a current that flows into the LED 401.

The current sensing unit 403 may sense a current flowing in the LED 401, may be connected to the control unit 406, and may provide the sensed current, i.e., a current Iosense, to the control unit 406.

Referring to FIG. 4, the current sensing unit 403 may include a resistor Ro to detect a current from the LED 401. However, there are no restrictions to the number of resistors included in the current sensing unit 403 and how the resistors are connected in the current sensing unit 403. That is, the current sensing unit 403 may include more than one resistor as long as it can properly detect a current.

The DC-to-DC converter 404 may convert an input voltage into an LED driving voltage, and may provide a uniform static current.

Specifically, the DC-to-DC converter 404 may include a transistor, and may receive a PWM signal from the control unit 406 via the gate of the transistor.

The DC-to-DC converter 404 may convert the PWM signal provided by the control unit 406 into a DC voltage, and may supply the DC voltage to the LED 401. The DC-to-DC converter 404 may provide a DC voltage corresponding to the forward bias voltage of the LED 401 so that the LED 401 may operate in a saturation region.

The LED driving unit 405 may function as a switching diode for dimming.

Specifically, the LED driving unit 405 may control the current that flows in the LED 401 in response to a dimming-on signal and a dimming-off signal. That is, the LED driving unit 405 may flow a current in the LED 401 in response to the receipt of a dimming-on signal, and may control no current to flow in the LED 401 in response to the receipt of a dimming-off signal.

The LED driving unit 405 may be realized as a transistor that performs a switching function.

When a dimming-on signal is received, the control unit 406 may control the DC-to-DC converter 404 such that the current sensed by the current sensing unit 403 may follow a reference current.

On the other hand, when a dimming-off signal is received, the control unit 406 may control the DC-to-DC converter 404 such that the voltage of the LED at a dimming-off time may be maintained.

The control unit 406 may include a current control unit, a voltage control unit, a sampling unit, and a switching unit.

The voltage control unit may receive an input dimming signal DIMIN.

When a dimming-off signal is received, the voltage control unit may receive the voltage of the LED 401 at a dimming-off time, which is provided by the sampling unit, i.e., the voltage Voref, may compare the voltage Voref with the voltage Vosense, which is the voltage of the LED 401 sensed during a dimming-off period, and may output a control signal for adjusting the duty cycle of a PWM signal such that the voltage Vosense may follow the voltage Voref. Here, the PWM signal may be input to a transistor Q1 of the DC-to-DC converter 404, and may maintain the same voltage as the voltage of the LED 401 at the dimming-off time.

The voltage control unit may be configured not to output a control signal for adjusting the duty cycle of a PWM signal when a dimming-on signal is received.

Referring to FIG. 4, the control unit 406 may include the switching unit, and may thus prevent, with the aid of the switching unit, the output of the voltage control unit from being transmitted to DC-to-DC converter 404, even if the voltage control unit outputs a control signal for adjusting the duty cycle of a PWM signal.

The current control unit may receive the input dimming signal DIMIN and a reference current Ioref.

When a dimming-on signal is received, the current control unit may output a control signal for adjusting the duty cycle of a PWM signal such that the current Iosense may follow the reference current, which is a desired level of current to be applied to the LED 401. Here, the PWM signal may be input to the transistor Q1 of the DC-to-DC converter 404 and may follow the reference current Ioref.

That is, by adjusting the duty cycle of a PWM signal, the voltage applied to the LED 401 may be controlled so that a desirable current may flow into the LED 401.

The current control unit may be configured not to output a control signal for adjusting the duty cycle of a PWM signal when a dimming-off signal is received.

Referring to FIG. 4, the control unit 406 may include the switching unit, and may thus prevent, with the aid of the switching unit, the output of the voltage control unit from being transmitted to DC-to-DC converter 404, even if the voltage control unit outputs a control signal for adjusting the duty cycle of a PWM signal.

The current control unit may receive the voltage Vosense in response to the voltage applied to the LED 401 being sensed.

The current control unit may receive the current Iosense in response to the current applied to the LED 401 being sensed.

The current control unit may output an output dimming signal DIMOUT indicating whether dimming is on or off to the LED driving unit 405 in response to the input dimming DIMIN.

When a dimming-on signal is received, the switching unit may transmit the control signal output by the current control unit to the LED driving circuit 405. When a dimming-off signal is received, the switching unit may transmit the control signal output by the voltage control unit to the LED driving circuit 405.

For example, referring to FIG. 4, the switching unit may be disposed in the control unit 406. In another non-limiting example, the switching unit may be disposed outside the control unit 406.

The sampling unit may receive the voltage Vosense, may sample the LED voltage at a dimming-off time, may uniformly maintain the sampled LED voltage, and may provide the corresponding LED voltage to the voltage control unit. In this example, the voltage control unit may receive a voltage obtained by the sampling performed by the sampling unit as the voltage Voref, and may compare the voltage Voref with the voltage Vosense.

In the example illustrated in FIG. 4, the apparatus 400 may uniformly maintain the output voltage of the LED 401 during a dimming-off period at a level required to stably flow a current into the LED 401 by compensating for any voltage drops that may be caused by electric discharges even when the dimming off period lasts for a long time during the operation of the LED driving circuit 405.

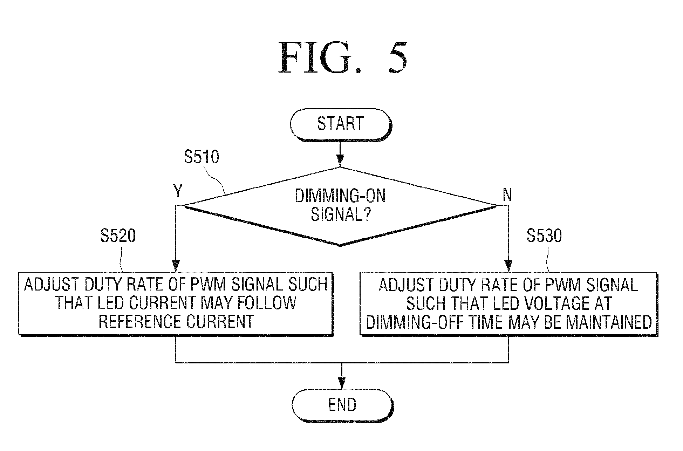

FIG. 5 is a flowchart illustrating a method of controlling an LED driving circuit according to an exemplary embodiment.

Referring to FIG. 5, in S510, a determination may be made as to whether a dimming-on signal has been received.

In S520, in a case in which it is determined that a dimming-on signal has been received (S510:Y), the duty cycle of a PWM signal of an LED driving circuit may be adjusted such that the current of an LED, which is driven by the LED driving circuit, may follow a reference current.

In S530, in a case in which it is determined that no dimming-on signal has yet been received (S510:N), the duty cycle of the PWM signal may be adjusted such that the voltage of the LED at a dimming-off time may be maintained.

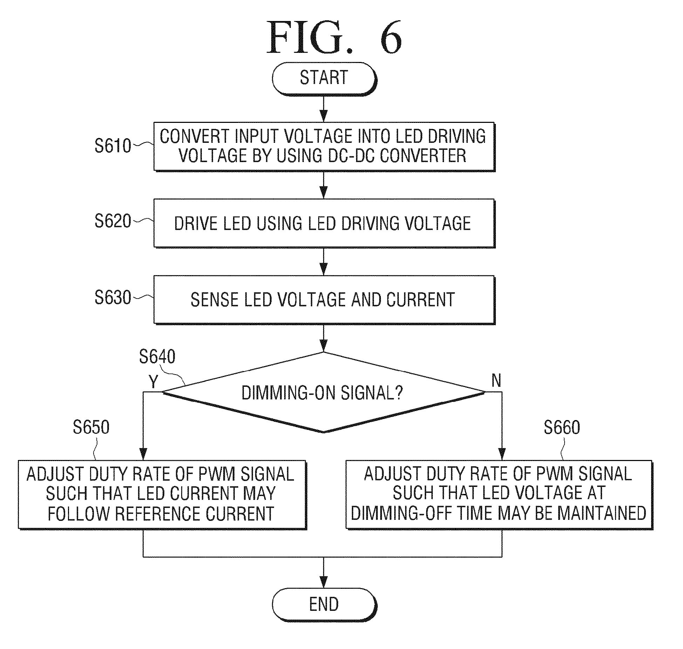

FIG. 6 is a flowchart illustrating a method of driving an LED according to an exemplary embodiment.

Referring to FIG. 6, in S610, an input voltage may be converted into an LED driving voltage by using a DC-to-DC converter. In S620, an LED may be driven using the LED driving voltage. In S630, the voltage and the current of the LED may be sensed. In S640, a determination may be made as to whether a dimming-on signal has been received.

In S650, in a case in which it is determined that a dimming-on signal has been received (S640:Y), the duty cycle of a PWM signal of an LED driving circuit may be adjusted such that the current of the LED, which is driven by the LED driving circuit, may follow a reference current.

In S660, in a case in which it is determined that no dimming-on signal has yet been received (i.e., a dimming-off signal has been received) (S640:N), the duty cycle of the PWM signal may be adjusted such that the voltage of the LED at a dimming-off time may be maintained.

As described above, it is possible to compensate for any voltage drops that may be caused by electric discharges even in case of a prolonged dimming-off period. Therefore, it is possible to uniformly maintain an LED output voltage at a required level to properly flow a current into an LED during a dimming-off period and thus to improve the dynamic contrast ratio and the picture quality of a display device.

The foregoing exemplary embodiments and advantages are merely exemplary and are not to be construed as limiting the present invention. The present teaching may be readily applied to other types of apparatuses. Also, the description of the exemplary embodiments of the present invention is intended to be illustrative, and not to limit the scope of the claims, and many alternatives, modifications, and variations will be apparent to those skilled in the art.

**Claims**

1. An apparatus for controlling a light-emitting diode (LED) driving circuit, the apparatus comprising:

   a current control unit which, if a dimming-on signal is received, outputs a first control signal for adjusting a duty cycle of a pulse width modulation (PWM) signal of the LED driving circuit such that a current of an LED, which is driven by the LED driving circuit, follows a reference current;
   a voltage control unit which, if a dimming-off signal is received, transmits a second control signal for adjusting the duty cycle of the PWM signal such that a voltage of the LED at a dimming-off time is maintained; and
   a switching unit which transmits the first control signal to the LED driving circuit, if the dimming-on signal is received, and transmits the second control signal to the LED driving circuit, if the dimming-off signal is received.

2. The apparatus of claim 1, further comprising:

   a sampling unit which samples the LED voltage at the dimming-off time and provides the sampled voltage to the voltage control unit.

3. The apparatus of claim 2, wherein the reference voltage is the LED voltage at the off time, which is a time at which the off signal is initially received during a cycle.

4. An apparatus for driving a light-emitting diode (LED), the apparatus comprising:

   an LED;
   a voltage sensing unit which senses a voltage applied to the LED;
   a current sensing unit which senses a current flowing into the LED;
   a DC-to-DC converter which converts an input voltage into an LED driving voltage and provides the LED driving voltage to the LED;
   an LED driving unit which drives the LED according to a dimming-on signal and a dimming-off signal; and
   a control unit which controls the DC-to-DC converter to make the current sensed by the current sensing unit follow a reference current, if the dimming-on signal is received, and controls the DC-to-DC converter to maintain the voltage sensed by the voltage sensing unit to be a same voltage as a voltage of the LED at a dimming-off time, if the dimming-off signal is received.

5. The apparatus of claim 4, wherein the DC-to-DC converter comprises a transistor which is driven by a pulse width modulation (PWM) signal with a duty cycle adjusted by the control unit.

6. The apparatus of claim 5, wherein the control unit comprises:

a current control unit which, if the dimming-on signal is received, outputs a first control signal for adjusting the duty cycle of the PWM signal such that the current sensed by the current sensing unit follows the reference current during a dimming-on period; and
a voltage control unit which, if the dimming-off signal is received, transmits a second control signal for adjusting the duty cycle of the PWM signal such that the voltage of the LED at the dimming-off time is maintained during a dimming-off period.

7. The apparatus of claim 6, wherein the control unit further comprises a switching unit which transmits the first control signal to the transistor of the DC-to-DC converter, if the dimming-on signal is received, and transmits the second control signal to the transistor of the DC-to-DC converter, if the dimming-off signal is received.

8. The apparatus of claim 7, wherein the control unit further comprises a sampling unit which samples the LED voltage at the dimming-off time and provides the sampled voltage to the voltage control unit.

9. The apparatus of claim 8, wherein, if the off signal is received, the voltage control unit compares the voltage sensed by the voltage sensor with the reference voltage, and outputs the second control signal based on a comparison result.

10. The apparatus of claim 6, wherein, if the on signal is received, the current control unit compares the current sensed by the current sensor with the reference current, and outputs the first control signal based on a comparison result.

11. A method of controlling a light-emitting diode (LED) driving circuit, comprising:

receiving a signal which alternates as a dimming-on signal and a dimming-off signal;
if the dimming-on signal is received, adjusting a duty cycle of a pulse width modulation (PWM) signal of the LED driving circuit such that a current of an LED, which is driven by the LED driving circuit, follows a reference current; and
if the dimming-off signal is received, adjusting the duty cycle of the PWM signal of the LED driving circuit such that a voltage of the LED at a dimming-off time is maintained.

12. A method of driving a light-emitting diode (LED), comprising:

converting an input voltage into an LED driving voltage by using a DC-to-DC converter;
driving an LED by using the LED driving voltage;
sensing a voltage and current of the LED;
receiving a signal which alternates as a dimming-on signal and a dimming-off signal;
if the dimming-on signal is received, controlling the DC-to-DC converter such that the sensed current follows a reference current; and
if the dimming-off signal is received, controlling the DC-to-DC converter to maintain the sensed voltage at a same voltage as a voltage of the LED at a dimming-off time.

13. The method of claim 12, wherein the controlling comprises:

increasing a duty cycle of a pulse width modulation (PWM) signal, which is input to a transistor included in the DC-to-DC converter to make the sensed current follow the reference current during a dimming-on period, if the dimming-on signal is received; and
increasing the duty cycle of the PWM signal to make the voltage of the LED present at the dimming-off time be maintained during a dimming-off period, if the dimming-off signal is received.

# FIG. 1A

OUTPUT VOLTAGE

OUTPUT CURRENT

DIMMING ON     DIMMING OFF     DIMMING ON     t

# FIG. 1B

OUTPUT VOLTAGE

OUTPUT CURRENT

DIMMING ON     DIMMING OFF     DIMMING ON     t

# FIG. 1C

# FIG. 1D

# FIG. 2

200

203

201

SWITCHING CONTROL UNIT

VOLTAGE CONTROL UNIT

202

CURERNT CONTROL UNIT

# FIG. 3

FIG. 4

# FIG. 5

START

S510

Y — DIMMING-ON SIGNAL? — N

S520

ADJUST DUTY RATE OF PWM SIGNAL SUCH THAT LED CURRENT MAY FOLLOW REFERENCE CURRENT

S530

ADJUST DUTY RATE OF PWM SIGNAL SUCH THAT LED VOLTAGE AT DIMMING-OFF TIME MAY BE MAINTAINED

END

# FIG. 6

START

S610 — CONVERT INPUT VOLTAGE INTO LED DRIVING VOLTAGE BY USING DC-DC CONVERTER

S620 — DRIVE LED USING LED DRIVING VOLTAGE

S630 — SENSE LED VOLTAGE AND CURRENT

S640

Y — DIMMING-ON SIGNAL? — N

S650 — ADJUST DUTY RATE OF PWM SIGNAL SUCH THAT LED CURRENT MAY FOLLOW REFERENCE CURRENT

S660 — ADJUST DUTY RATE OF PWM SIGNAL SUCH THAT LED VOLTAGE AT DIMMING-OFF TIME MAY BE MAINTAINED

END

Europäisches
Patentamt

European
Patent Office

Office européen
des brevets

**EUROPEAN SEARCH REPORT**

**Application Number**

EP 12 16 1701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 615 974 B1 (XU XIAORU [CN]) 10 November 2009 (2009-11-10) * column 2 - column 4; figure 1 * * column 4 - column 5; figure 2 * ----- | 1-13 | INV. H05B33/08 |
| A | US 2004/124889 A1 (KOHARAGI YOSHITAKA [JP] ET AL) 1 July 2004 (2004-07-01) * figure 1 * * paragraphs [0033], [0037], [0041], [0045] * * figure 4 * ----- | 1,4,11, 12 | |
| A | EP 2 096 900 A1 (KOITO MFG CO LTD [JP]) 2 September 2009 (2009-09-02) * paragraph [0039] - paragraph [0041] * ----- | 1,4,11, 12 | |
| | | | TECHNICAL FIELDS SEARCHED (IPC) |
| | | | H05B |

The present search report has been drawn up for all claims

| Place of search | Date of completion of the search | Examiner |
|---|---|---|
| The Hague | 22 November 2012 | Benedetti, Gabriele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 16 1701

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2012

| Patent document cited in search report | | Publication date | Patent family member(s) | | Publication date |
|---|---|---|---|---|---|
| US 7615974 | B1 | 10-11-2009 | NONE | | |
| US 2004124889 | A1 | 01-07-2004 | JP<br>JP<br>US | 4017960 B2<br>2004147435 A<br>2004124889 A1 | 05-12-2007<br>20-05-2004<br>01-07-2004 |
| EP 2096900 | A1 | 02-09-2009 | EP<br>JP<br>US | 2096900 A1<br>2009205846 A<br>2009212710 A1 | 02-09-2009<br>10-09-2009<br>27-08-2009 |

EPO FORM P0459

For more details about this annex : see Official Journal of the European Patent Office, No. 12/82